# EUROPEAN PATENT SPECIFICATION

(11) **EP 1 906 797 B1**
(45) Date of publication and mention of the grant of the patent: **08.09.2010**
(21) Application number: 06800189.0
(22) Date of filing: 22.07.2006
(51) Int. Cl.: A47J 31/00, A47J 31/36

(54) **GEAR-DRIVEN LOCKING ASSEMBLY FOR BREW HEAD ASSEMBLY**
GETRIEBEGESTEUERTE SPERRANORDNUNG FÜR EINE BRÜHKOPFANORDNUNG
ENSEMBLE DE VERROUILLAGE ENTRAINE PAR ENGRENAGE POUR ENSEMBLE TETE D'INFUSION

(30) Priority: 22.07.2005 US 188244; 09.11.2005 US 270021
(43) Date of publication of application: 09.04.2008
(73) Proprietor: Electrical and Electronics Limited, Tai Po, N.T., Hong Kong (CN)
(72) Inventor: CHEN, Andrew Yuen Chin, 53 Ting Kok Road, Tai Po, N.T., Hong Kong (CN); SO, Tin Yiu, 53 Ting Kok Road, Tai Po, N.T., Hong Kong (CN)
(74) Representative: Capasso, Olga
(86) International application number: PCT/US2006/028338
(87) International publication number: WO 2007/014018

(56) References cited:
- EP-A- 1 495 703
- WO-A-2004/028318
- US-A- 3 713 377
- US-A- 5 638 741
- US-A- 5 992 298
- US-A1- 2005 132 891
- US-B2- 6 490 966

## Description

### FIELD OF THE INVENTION

The present invention pertains to a brew head assembly of a coffee machine comprising a locking assembly which permits easy one-hand operation by a user. The brew head assembly also comprises a sealing assembly.

### Background of the Invention

Single- serving coffee makers have become more popular in recent years. Most single-serving machines use a pressure pump to deliver heated liquid or water during the brewing process. Many different pressure- or fluid-tight locking mechanisms have therefore been developed for pressurized coffee makers. These locking mechanisms typically use a slider to lock or secure the brew head of the coffee maker. For instance, WO 2004028318 describes a locking mechanism that uses a toggle joint lever system to move the slider to the open or closed position. One disadvantage of using a toggle joint lever system to move the slider is that, for proper operation, the lever can only be mounted on the front center of the brew head.

The application EP 1 495 703 discloses a locking device sustaining high pressure in a coffee maker which comprises a brew head assembly which comprises: a slide assembly, a sealing assembly and a pop-up and roll-back assembly, operatively linked to sustain pressure up to four bars.

The gear-driven locking assembly of the present invention allows the lever to be placed or located either on the top, rear, side or in the front of the brew head assembly. The construction of the present invention is more dynamic and flexible, and can be adapted for sliding or rotating the locking member or element between a locked and an unlocked position. An advantage of the gear-driven locking assembly of the present invention is that only a small force is required to turn the lever for locking. In one embodiment, the locking assembly is capable of withstanding pressures up to 4 bars. In another embodiment, the locking assembly is capable providing fluid- and/or pressure-tight seal up to 20 bars. Typically for a single-serve brewing device, a locking assembly capable of maintaining fluid- and/or pressure-tight seal up to between 3-4 bars may be sufficient. For an espresso machine, however, a locking assembly capable of providing fluid- and/or pressure-tight seal at higher pressures, preferably between 15-20 bars, may be required.

In a locking assembly of the present invention adapted for maintaining fluid- and/or pressure-tight seal up to 20 bars, the components, such as the seal, locking cam(s) and corresponding recess(es), are provided with increase strength.

### SUMMARY OF THE INVENTION

The brew head assembly of the present invention comprises two key, interconnected components: a gear-driven locking assembly and a sealing assembly.

The gear-driven locking assembly of the invention comprises the following parts which are all operatively-linked to form the gear-driven locking assembly: a lever, a drive rod provided with a gear or a gear-teeth surface, a drive rod clamp, a lock plate provided with a gear-teeth surface or a gear disposed on its upper surface, a lock plate stopper or a gear stopper, a lid mount, and a brew head bottom. In an embodiment, the parts are assembled from molded components. In another embodiment, the parts are molded or forged from plastic, metal, or any other suitable material known in the art having a sufficient combination of strength and rigidity to maintain its structural integrity.

The sealing assembly of the invention comprises the following parts which are all operatively-linked to form the sealing assembly: a seal ring, a water spreader, a pod ejector, a metal filter, a pod holder, and a coffee collector.

The operation of the locking assembly of the present invention is performed as follows:
Initially, the locking assembly is in the closed position. Before brewing coffee, a coffee pod or an appropriate amount of coffee grounds (or tea, hot chocolate, etc.) are placed in the pod holder. The pod holder can be removed for cleaning or refilling purposes by unlocking the brew head.

In one embodiment of the present invention, the locking or unlocking of the brew head assembly is effectuated or assisted by a plurality of cams provided on a rotating lock plate and corresponding recesses situated on the brew head assembly. In a specific embodiment, the lock plate comprises at least two cams and the brew head assembly is provided with corresponding recesses.

In a preferred embodiment, the lock plate comprises at least three cams and the brew head assembly is provided with corresponding recesses. In a further embodiment, the lock plate comprises three cams and two corresponding recesses. In an another embodiment, the lock plate comprises three cams and one corresponding recess. In a separate embodiment, the lock plate comprises three cams and no corresponding recesses.

In still another embodiment not according to the present invention, the cams are provided on the brew head assembly and the recesses are provided on the rotating lock plate. Rotation of the lock plate, preferably about a vertical or substantially vertical axis, displaces the locking assembly between a locked and an unlocked position.

When the lever is lifted upward, the drive rod, which is rotatably-mounted to the lid mount by a drive rod clamp, will rotate in the direction of the force applied by the lever. The rotation of the drive rod causes the intermeshing gears and/or gear-teeth surfaces disposed on the drive rod and on the lock plate to rotate integrally with or relative to each other, and the lock plate rotates in the direction that disengages the cams from their corresponding recesses and unlocks the brew head assembly. In an embodiment, the drive rod is rotatably mounted to the lid mount by a suitable clamp or anchoring part/member.

Conversely, when the lever is pushed downward, the drive rod will rotate in the direction of the force applied by the lever. The rotation of the drive rod in the reverse direction (relative to previous paragraph) causes the intermeshing gears and/or gear-teeth surfaces disposed on the drive rod and on the lock plate to rotate integrally with or relative to each other, and the lock plate rotates in the direction that engages the cams with their corresponding recesses and locks the brew head assembly.

When the brew head assembly is open, a lock plate stopper provided on the lid mount prevents the lock plate from rotating when the lever is subsequently pulled downward to close the brew head assembly. In an embodiment, the lock plate stopper is inverse U-shaped with two prongs. In another embodiment, the spring or the like is mounted on at least one prong of the lock plate stopper, and the lock plate stopper is operatively mounted on the lid mount such that when the brew head assembly is open, the spring pushes the lock plate stopper downward and through the lid mount to restrict the movement of the lock plate. When the brew head assembly is closed, the lock plate stopper is pushed upward allowing the lock plate to rotate freely. In an embodiment, the lock plate stopper is pushed upward by a top surface of the brew head bottom when the brew head assembly is closed.

In another embodiment of the present invention, the locking and unlocking of the brew head assembly is effectuated or assisted by a plurality of cams provided on a sliding lock plate and corresponding recesses provided on the brew head assembly. In a specific embodiment, the lock plate comprises at least two cams and corresponding recesses provided on the brew head assembly.

In a preferred embodiment, the lock plate comprises at least three cams and corresponding recesses provided on the brew head assembly.

In a further embodiment, the lock plate comprises three cams and two corresponding recesses. In still another embodiment, the lock plate comprises three cams and one corresponding recess. In a separate embodiment, the lock plate comprises three cams and no corresponding recess.

Movement of the sliding lock plate in a substantially horizontal plane displaces the locking assembly between a locked and an unlocked position. In another embodiment, the cams are provided on the brewing assembly and the corresponding recesses are provided on the sliding lock plate.

When the lever is lifted upward, the drive rod, which is rotatably-mounted to the lid mount by a drive rod clamp, will rotate in the direction of the force applied by the lever. The rotation of the drive rod causes the intermeshing gears and/or gear teeth surfaces disposed on the drive rod and on the slide lock plate to move integrally with or relative to each other and the slide lock plate slides in the direction which disengages the cams from their corresponding recesses and unlocks the brew head assembly.

Conversely, when the lever is pushed downward, the drive rod will rotate in the direction of the force applied by the lever. The rotation of the drive rod in the reverse (relative to the previous paragraph) direction causes the intermeshing gears and/or gear teeth surfaces disposed on the drive rod and on the slide lock plate to move integrally with or relative to each other and the slide lock plate slides in the direction which engages the cams with their corresponding recesses and locks the brew head assembly.

When the brew head assembly is open, a gear stopper provided on the lid mount meshes with or engages the gear-teeth surface of the drive rod and prevents the lock plate from sliding when the lever is subsequently pulled downward to close the brew head assembly. In an embodiment, the gear stopper is inverse L-shaped with an upper horizontal member and a vertical member. In another embodiment, the upper horizontal member comprises a hook-like member or an appropriately shaped protrusion for engaging the gear or gear-teeth surface. In another embodiment, a spring or the like is mounted on the vertical member of the gear stopper, and the gear stopper is mounted on the lid mount such that when the lid mount is open, the spring pushes the gear stopper downward to restrict the movement of the lock plate. When the brew head assembly is closed, the gear stopper rises upward to allow the lock plate to move freely. In an embodiment, a top surface or the brew head bottom pushes the gear stopper upward when the brew head assembly is closed.

In one embodiment, the cams and corresponding recesses are situated and dimensioned in a way such that the cams can only engage the recesses when the lid frame or upper brew head closes off the brew head bottom of the brew head assembly completely. In a preferred embodiment, the cams and corresponding recesses are wedge-shaped to facilitate the mating of the cams with the corresponding recesses.

The position of the cams and corresponding recesses can vary. For example, the cams and corresponding recesses can be placed in a circular or linear arrangement. Furthermore, the cams can be evenly spaced on the lock plate, and the corresponding recesses can be evenly spaced along the periphery of the brew head bottom.

This invention provides a gear-driven locking assembly for a brew head assembly, comprising: lever, drive rod, drive rod clamp, rotating lock plate, lid mount, and brew head bottom, all operatively linked to form the gear-driven locking assembly.

This invention provides a gear-driven locking assembly for a brew head assembly, comprising: lever, drive rod, drive rod clamp, sliding lock plate, lid mount, and brew head bottom, all operatively linked to form the gear-driven locking assembly.

This invention provides a brew head assembly, comprising: a gear-driven locking assembly; and a sealing assembly, where the locking assembly and sealing assembly are operatively linked to sustain pressure up to four (4) bars. In another embodiment, the locking assembly and sealing assembly are fabricated to provide fluid- and/or pressure-tight connection up 20 bars.

### DETAILED DESCRIPTION OF THE FIGURES

The present invention pertains to a brew head assembly of a coffee machine comprising a locking assembly which permits easy one-hand operation by a user. The brew head assembly also comprises a sealing assembly. In a preferred embodiment, the brew head assembly is capable of sustaining pressures up to 4 bars.

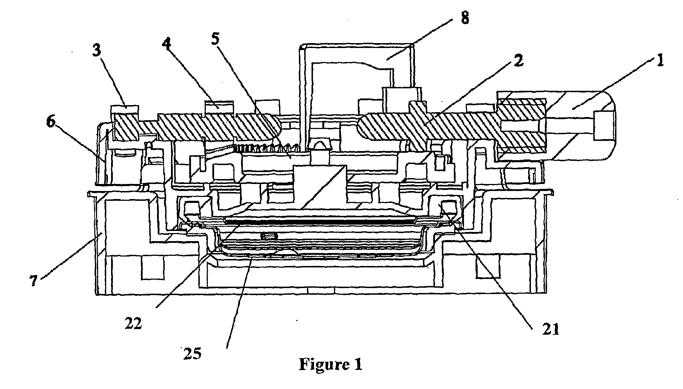

The accompanying Figures 1 to 17 are intended to illustrate non-limitative embodiments of the present invention.

In one embodiment, the brew head assembly comprises a gear-driven rotating lock plate latching/locking assembly, shown in Figures 1 to 7.

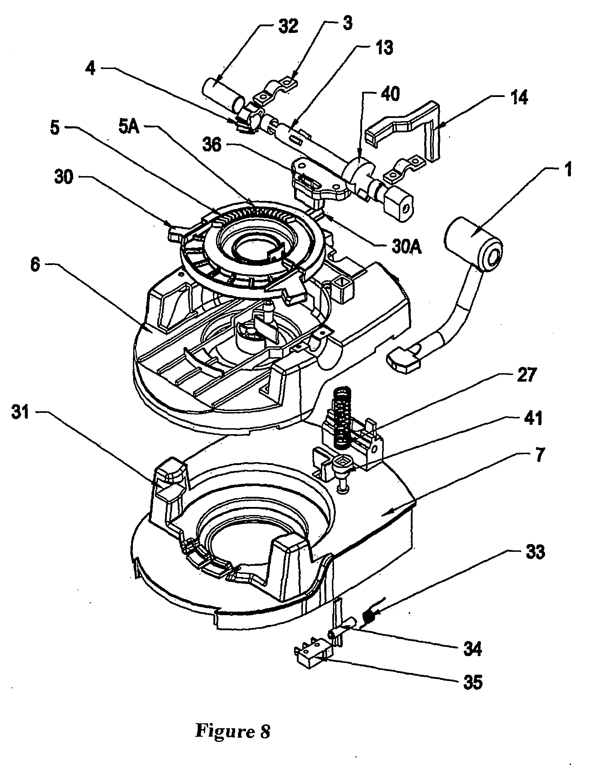

In another embodiment, the brew head assembly comprises a gear-driven rotating lock plate latching/locking assembly with three cams and two corresponding recesses as shown in Figure 8.
**Figure 1** is a cross-sectional view of a brew head assembly comprising a gear-driven locking assembly. The gear-driven locking assembly comprises a rotating lock plate 5.

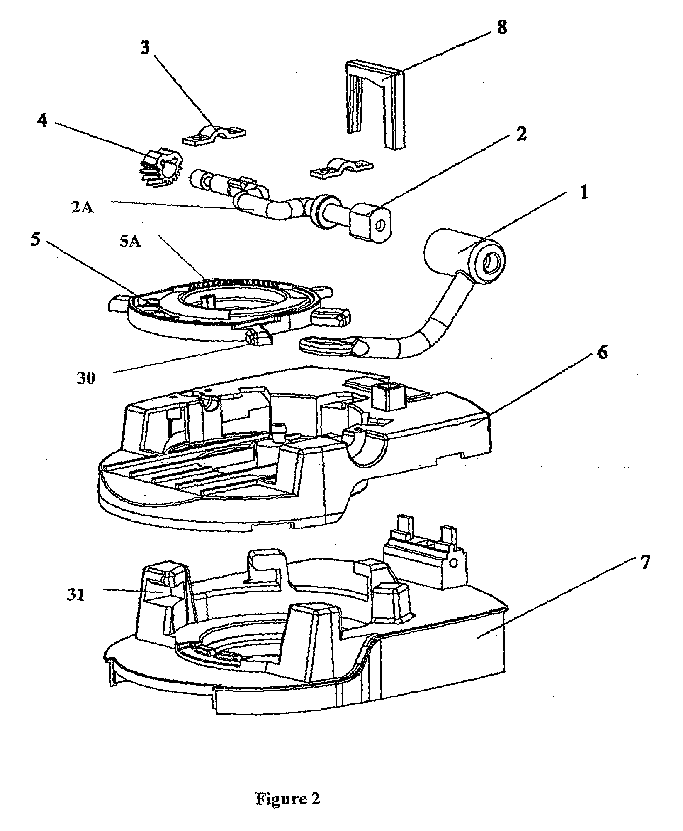

**Figure 2** is an exploded view of a brew head assembly comprising a gear-driven locking assembly. The locking assembly further comprises a rotating lock plate 5.

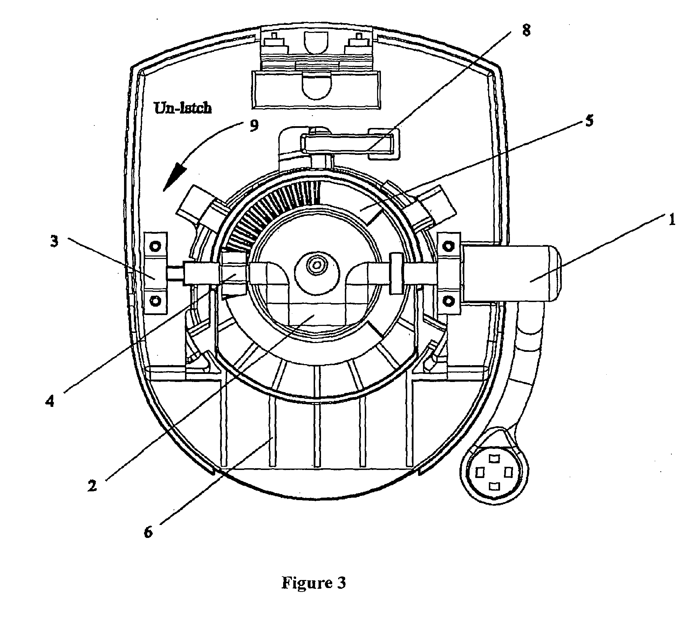

**Figure 3** is a top view of a brew head assembly comprising a gear-driven locking assembly in the latched/locked position. The brew head assembly can be unlatched/unlocked with one hand by lifting the lever 1 upward. The upward movement of the lever causes the lock plate 5 to rotate in the direction illustrated by arrow 9 (counterclockwise) to unlatch/unlock the brew head assembly.

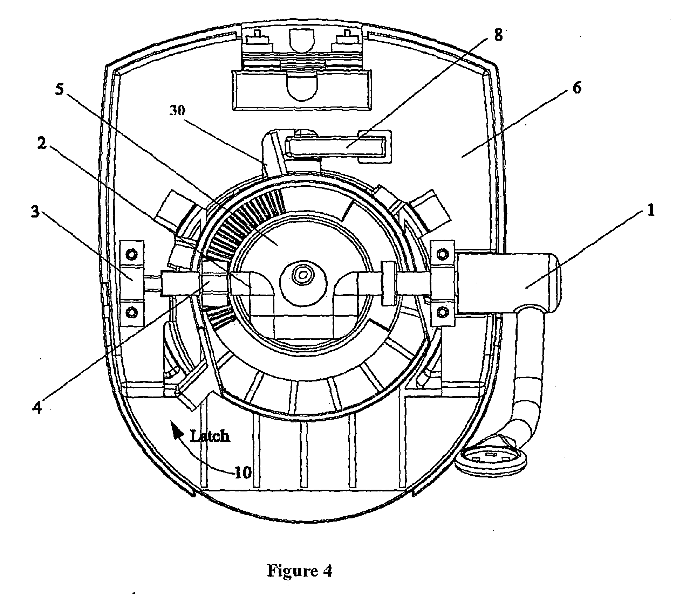

**Figure 4** is a top view of a brew head assembly comprising a gear-driven locking assembly in the unlatched/unlocked position. The brew head assembly can be latched/locked with one hand by pushing the lever 1 downward. The downward movement of the lever causes the lock plate 5 to rotate in the direction illustrated by arrow 10 (clockwise) to latch/lock the brew head assembly. With the lid in the open position, the lock plate stopper is lowered to block movement of one of the cams of the lock plate.

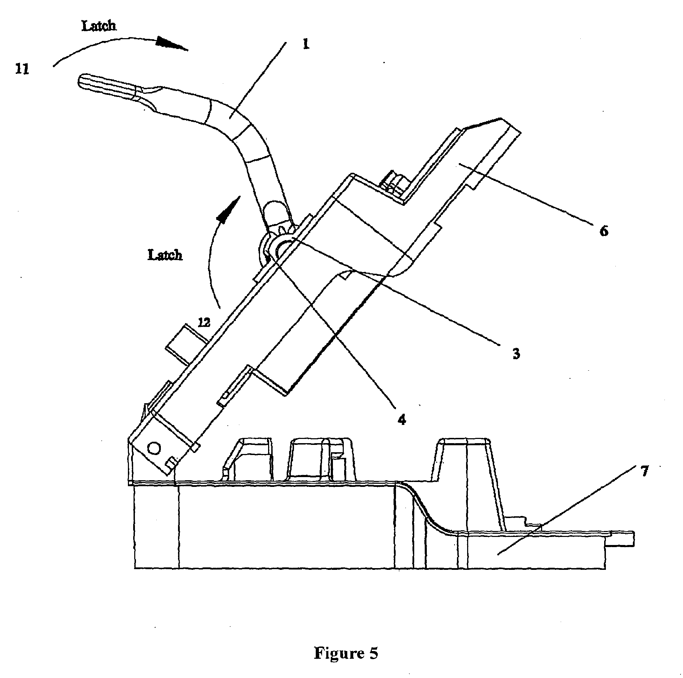

**Figure 5** is a side view of a brew head assembly, comprising a gear-driven locking assembly. The lid mount is pivotally attached to the brew head bottom. Arrow 11 shows the movement of the lever 1 when latching/locking the brew head assembly. Arrow 12 shows the rotational movement of the gear when latching/locking the brew head assembly.

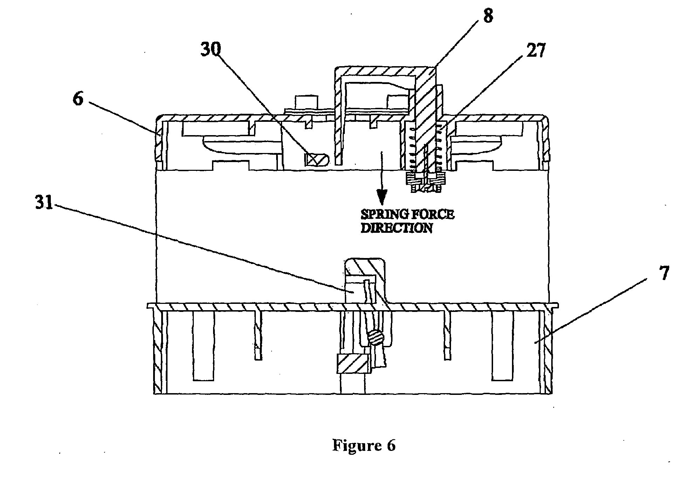

**Figure 6** is a cross-sectional view of a lock plate stopper when the brew head assembly is open. A spring is mounted on one prong of the lock plate stopper such that the lock plate stopper is urged or pushed downward by the force of the spring. The lock plate stopper is configured to restrict the movement of the cam on the lock plate when the lid mount is being closed.

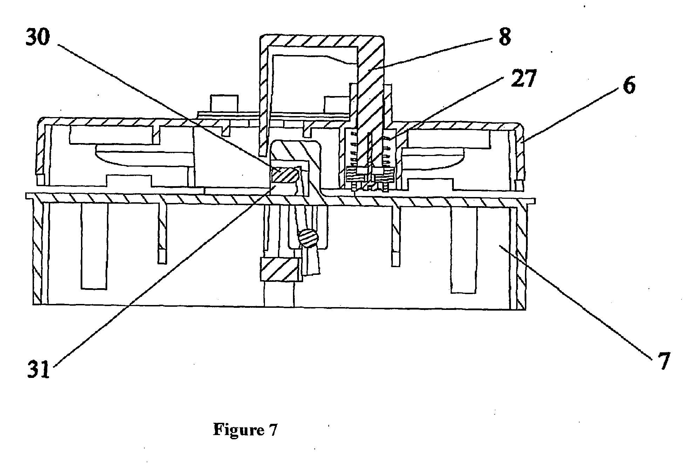

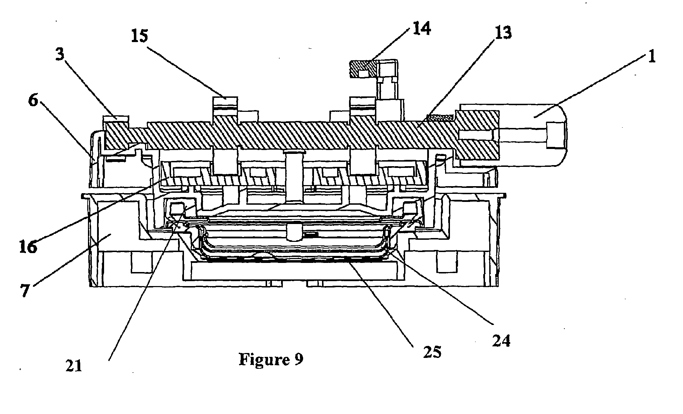

**Figure 7** is a cross-sectional view of a lock plate stopper when the brew head assembly is closed. When the brew head assembly is closed, the lock plate stopper is pushed upward up by the brew head bottom to allow the lock plate to move freely. In an embodiment, the brew head assembly comprises a gear-driven sliding lock plate latching/locking assembly as shown in Figures 9 to 15.
**Figure 8** is an exploded view of the gear-driven locking assembly of the present invention depicting its rotating lock plate with three cams and two corresponding recesses.
**Figure 9** is a cross-sectional view of a brew head assembly comprising a gear-driven sliding locking assembly.

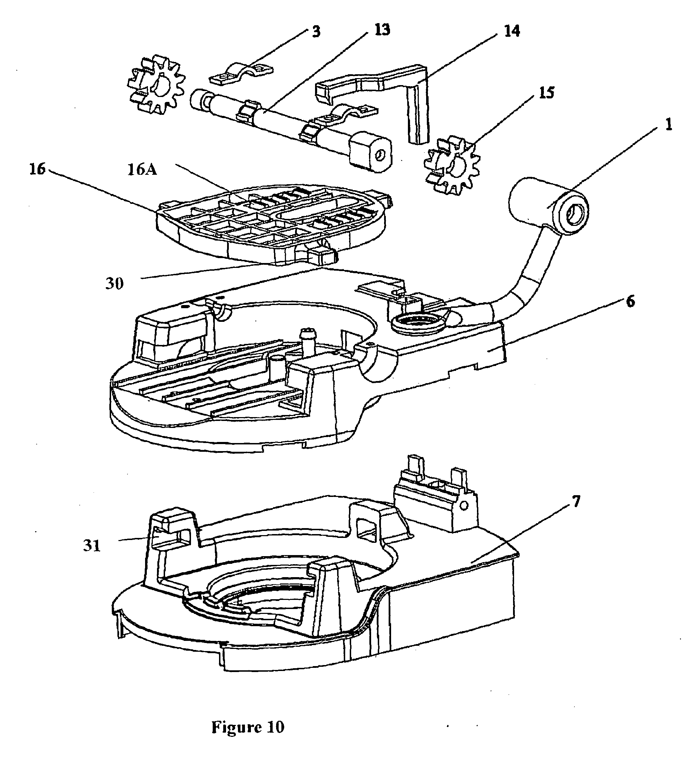

**Figure 10** is an exploded view of a brew head assembly comprising a gear-driven locking assembly. The locking assembly further comprises a slider or sliding lock plate 16.

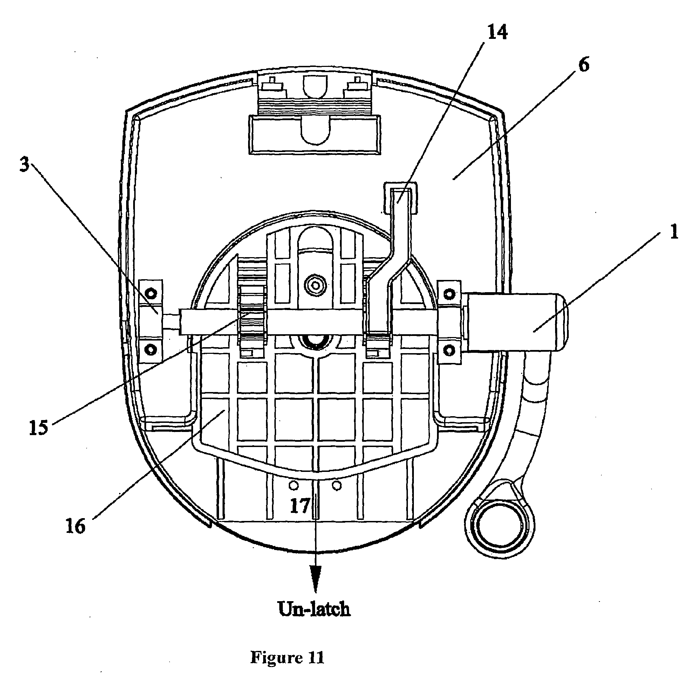

**Figure 11** is a top view of a brew head assembly comprising a gear-driven locking assembly in the latched/locked position. The brew head assembly can be unlatched/unlocked with one hand by lifting the lever 1 upward. The upward movement of the lever causes the slider or sliding lock plate 16 to move outward in the direction of arrow 17 to unlatch/unlock the brew head assembly.

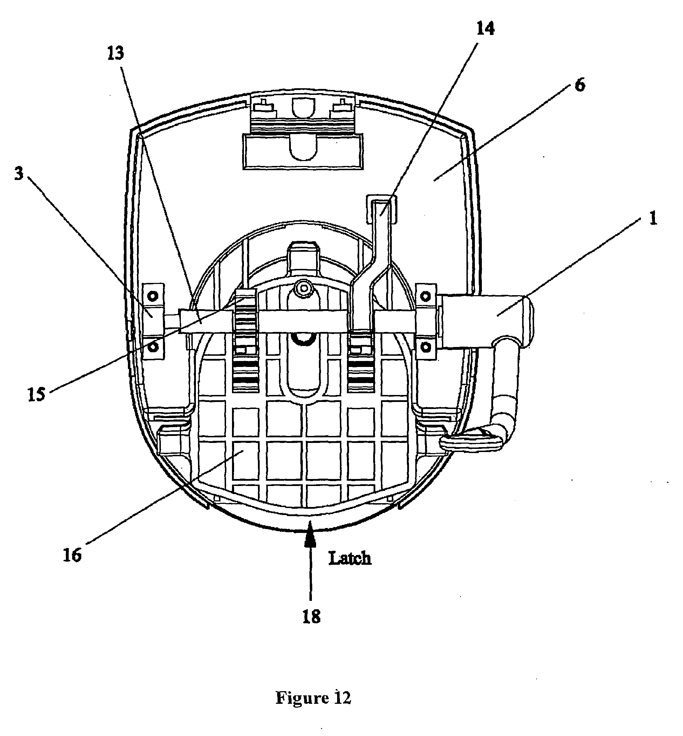

**Figure 12** is a top view of a brew head assembly comprising a gear-driven locking assembly in the unlatched/unlocked position. The brew head assembly can be latched/locked with one hand by pushing the lever 1 downward. The downward movement of the lever causes the slider or sliding lock plate 16 to move inward in the direction of arrow 18 to latch or lock the brew head assembly.

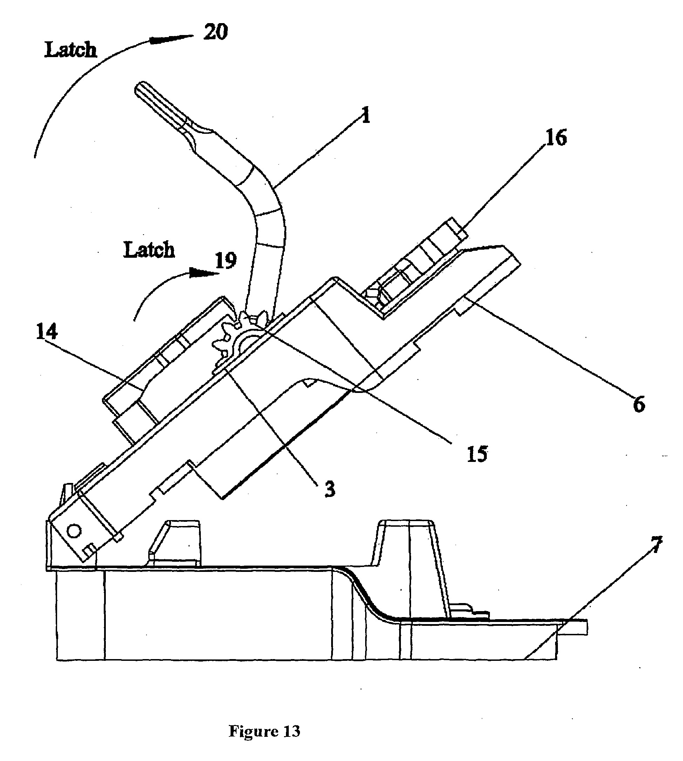

**Figure 13** is a side view of a brew head assembly, comprising a gear-driven locking assembly. The lid mount is pivotally attached to the brew head bottom. Arrow 20 shows the movement of the lever 1 when latching/locking the brew head assembly. Arrow 19 shows the rotational movement of the gear when latching/locking the brew head assembly. In doing so, the gear stopper engages the gear teeth to prevent the gear from rotating.

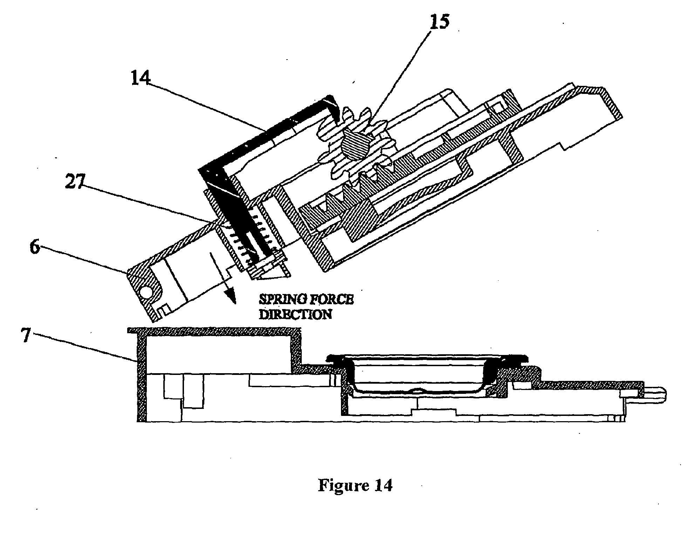

**Figure 14** is a cross-sectional view of a gear stopper when the brew head assembly is open. A spring is mounted on the gear stopper such that the gear stopper is pushed downward by the force of the spring. The gear stopper restricts the movement of the gear or gear-teeth surface provided on the drive rod.

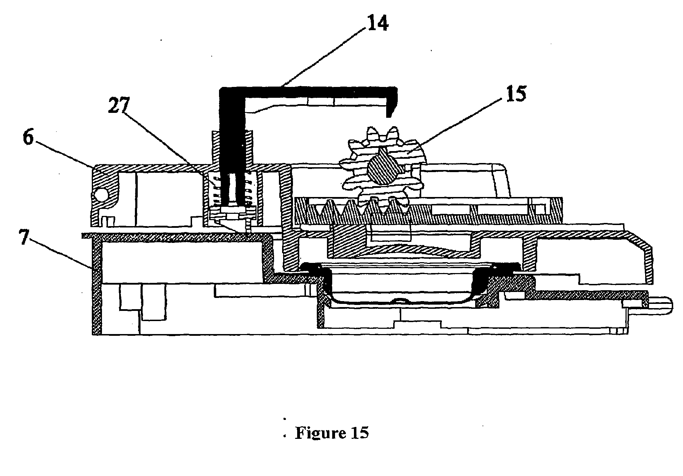

**Figure 15** is a cross-sectional view of a gear stopper when the brew head assembly is closed. The gear stopper is pushed upward by the brew head bottom to allow the sliding lock plate to move Freely.

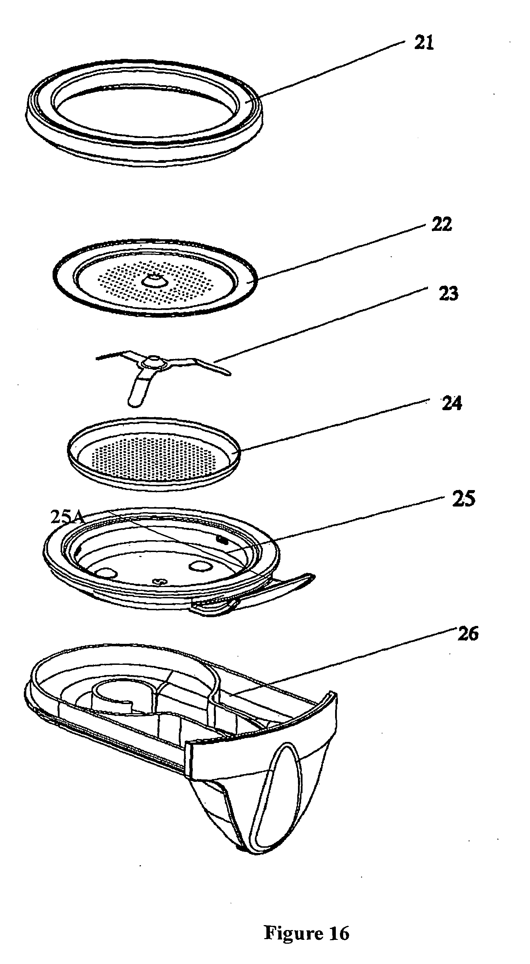

**Figure 16** is an exploded view of a sealing assembly of the present invention.

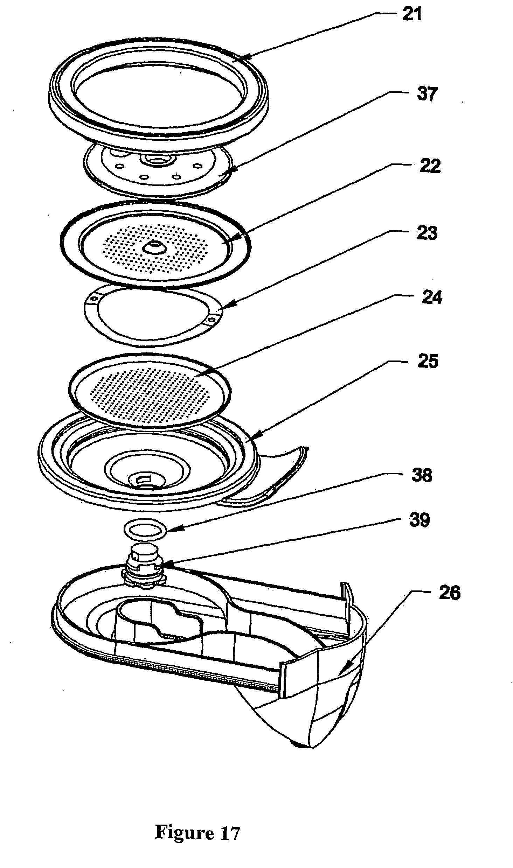

**Figure 17** is an exploded view of the sealing assembly of the present invention with hot water valve.

### DETAILED DESCRIPTION OF THE INVENTION

The present invention pertains to a brew head assembly of a coffee machine comprising a gear-driven locking assembly and a sealing assembly, operatively linked to form the brew head assembly..In a preferred embodiment, the brew head assembly is capable of sustaining pressures up to four (4) bars. In another embodiment, the locking assembly and the sealing assembly is adapted or fabricated to provide fluid- and/or pressure-tight connection of the brew head assembly up to twenty (20) bars. It should be noted that the present machine need not be limited to coffee machines. Those skilled in art will appreciate that the present invention may be utilized in situations consistent with its spirit, such as the brewing of teas, herbal medicines, or other extractions.

The present invention pertains to a brew head assembly for a brewing device, useful for locking and sealing the brew head, comprising an upper brew head part (lid mount) and a lower brew head part (brew head bottom), wherein the upper brew head part and the lower brew head part are pivotally joined, and the upper brew head part further comprises a lock plate, a drive rod, a gear, and a lever. The locking and unlocking action of the brew head assembly can be easily and quickly accomplished.

In an embodiment of the invention, a rotating lock plate is employed in the locking assembly. The lock plate is rotatably-mounted to the upper brew head part and rotates on a plane that is substantially parallel to a surface of the upper brew head part. The lock plate comprises a gear-teeth surface and at least 2 locking cams extending from the periphery of the lock plate. In an embodiment, the locking cams are provided on the periphery of the lock plate. The drive rod is horizontally-mounted on the upper brew head part and joined to the lever. In a preferred embodiment, the drive rod is U-shaped.

A gear is mounted on the drive rod such that the drive rod passes through the center of the gear and the rotation of the rotating rod will cause the mounted gear to also rotate. The gear on the drive rod is positioned so that it mates or meshes with the gear-teeth surface on the lock plate. The corresponding recesses for engaging or disengaging the locking cams are provided on the lower brew head part. The downward and upward movement of the lever causes the lock plate to rotate so as to engage (lock) and disengage (unlock), respectively, the cams and corresponding recesses.

In one embodiment, the gear is a bevel gear, a gear-teeth surface, an annular bevel gear, a crown wheel, a wheel with cogs or teeth, a crown wheel and pinion, or the like. In another embodiment, the lock plate rotates about a vertical axis that is substantially perpendicular to the plane of the lower brew head part. In a further embodiment, the brew head assembly comprises a sealing assembly. In a further embodiment, the sealing assembly comprises a seal ring, water spreader, pod ejector, metal filter, pod holder, and coffee collector.

The brew head is locked or closed by pushing the handle downward, causing the drive rod and the mounted gear to rotate. Rotation of the gear causes the lock plate to also rotate, causing the locking cams to mate with the corresponding recesses provided on the lower brew head part.

The present invention further pertains to a brew head assembly for a brewing device, useful for locking and sealing the brew head, comprising an upper brew head part (lid mount) and a lower brew head part (brew head bottom), wherein the upper brew head part and the lower brew head part are pivotally joined. The upper brew head part further comprises a sliding lock plate, a drive rod, at least one gear, and a lever. The sliding lock plate is movably-mounted to the upper brew head part and slides in a linear manner between a locked position and an unlocked position. The sliding lock plate comprises a gear-teeth surface and at least 2 locking cams extending from the periphery of the plate. In an embodiment, the locking cams are provided on the periphery of the lock plate. In a preferred embodiment, the gear teeth on the plate surface are arranged into one or more linear tracks.

The drive rod is horizontally-mounted on the upper brew head part and joined to the lever. The gear(s) is mounted on the drive rod such that the drive rod passes through the center of the gear(s). Rotation of the drive rod causes the gear(s) to also rotate. Gear(s) mounted on the drive rod mate or mesh with the gear-teeth surface on the sliding lock plate. The corresponding recesses that engage or disengage with the locking cams are provided on the lower brew head part. In an embodiment, the recesses are provided on the lock plate and the cams are provided on the lower brew head part. The downward and upward movement of the lever causes the sliding lock plate to move between a locked position and an unlocked position. In a further embodiment, a linear gear teeth surface is provided on the sliding lock plate and a gear is mounted on the drive rod.

The brew head is locked or closed by moving the handle downward which causes the drive rod and the mounted gear(s) to rotate. The rotation of the mounted gear(s) causes the sliding lock plate to move linearly, i.e., inward, so that the locking cams mate with the corresponding recesses provided on the lower brew head part. In an embodiment, the recesses are provided on the lock plate and the cams are provided on the lower brew head part.

In a preferred embodiment, two gears are mounted on the drive rod. The space between the mounted gears may vary. In a particular embodiment, the gears are evenly-spaced apart. In a further embodiment, the brew head assembly comprises a sealing assembly. In a further embodiment, the sealing assembly comprises a seal ring, water spreader, pod ejector, metal filter, pod holder, and coffee collector.

This invention provides a gear-driven locking assembly for a brew head assembly, comprising: a) lever, b) drive rod, c) drive rod clamp, d) rotating lock plate, e) lid mount, and f) brew head bottom, all operatively linked to form the gear-driven locking assembly. In an embodiment, the drive rod has a cylindrical shaft and comprises a gear or gear-teeth surface. In another embodiment, the gear or gear-teeth surface is a bevel gear or bevel gear-teeth surface. In a further embodiment, the drive rod is U-shaped or has a U-shaped member. In a further embodiment, the rotating lock plate comprises gear teeth on its top surface and at least two locking cams extending from the periphery.thereof. In a further embodiment, the gear teeth on the top surface of the rotating lock plate are bevel gear teeth. In a further embodiment, the locking cams are wedge-shaped. In a further embodiment, the brew head bottom further comprises at least two recesses for engaging locking cams. In a further embodiment, the locking assembly further comprises a lock plate stopper.

This invention provides a gear-driven locking assembly for a brew head assembly, comprising: a) lever, b) drive rod, c)drive rod clamp, d) sliding lock plate, e) lid mount, and f)brew head bottom, all operatively linked to form the gear-driven locking assembly. In an embodiment, the drive rod has a cylindrical shaft and comprises a gear or gear-teeth surface. In another embodiment, the sliding lock plate comprises gear teeth on its top surface and at least two locking cams extending from the periphery thereof. In a further embodiment, the gear teeth on the top surface of the sliding lock plate are in a linear arrangement. In a further embodiment, the locking cams are wedge-shaped. In a further embodiment, the brew head bottom further comprises at least two recesses for engaging locking cams.

In a further embodiment, the locking assembly further comprises a gear stopper.

This invention provides a brew head assembly, comprising: a) A gear-driven locking assembly; and b) A sealing assembly, where the locking assembly and sealing assembly are operatively linked to sustain pressure up to four (4) bars. In an embodiment, the gear-driven locking assembly comprises a lever, drive rod, drive rod clamp, rotating lock plate or sliding lock plate, lock plate stopper or gear stopper, lid mount, and brew head bottom, all operatively linked to form the gear-driven locking assembly. In another embodiment, the sealing assembly comprises a seal ring, water spreader, pod ejector, metal filter, pod holder, and coffee collector, all operatively linked to form the sealing assembly. In a further embodiment, the seal ring is round with a flap on its bottom portion for improved sealing. In a further embodiment, the locking assembly and the sealing assembly provides liquid- and/or pressure-tight sealing of the brew head assembly.

Other advantages and embodiments of the present invention will become apparent upon reading the following examples.

### EXAMPLES

The invention, being generally described, will be more readily understood by reference to the following examples which are included merely for purposes of illustration of certain aspects and embodiments of the present invention and are not intended to limit the scope of the invention.

Example 1: Gear-Driven Rotating Lock Plate Locking Assembly The gear-driven locking assembly of the present invention is useful for locking and unlocking the brew head assembly of a coffee maker. The gear-driven locking assembly comprises a lever, a drive rod with a gear or gear-teeth surface, a drive rod clamp, a lock plate with a gear-teeth surface or gear disposed on its upper surface, a lock plate stopper, a lid mount, and a brew head bottom, all operatively linked to form the gear-driven locking assembly. As used herein, gear includes, but is not limited to, annular bevel gear, bevel gear, crown wheel, wheel with cogs or teeth, and crown wheel and pinion. Other types of gears which are suitable and which are well-known to those skilled in the art may be found, for example, at "Gears Manufacturers Marketplace" http://www.gears-manufacturers.com/crown-wheel-pinion.html.

A gear is mounted onto the drive rod. The drive rod is mounted on the lid mount and is attached to the lever. When the drive rod rotates, the mounted gear on the drive rod also rotates in the same direction as the drive rod. The lock plate is rotatably-mounted on the lid mount. The teeth of the gear or gear-teeth surface disposed on the upper surface of the lock plate intermesh with the teeth of the gear or gear-teeth surface provided on the drive rod. Rotation of the drive rod also rotates the lock plate about a vertical or a substantially vertical axis. Rotation of the lock plate in one direction (e.g., clockwise) causes the cams provided on the lock plate to engage the corresponding recesses, and rotation of the lock plate in the other direction (e.g., counterclockwise) causes the cams provided on the lock plate to disengage from the corresponding recesses. In a preferred embodiment, the lock plate is provided with at least two locking cams.

The drive rod, gear or gear-teeth surface, and lock plate are forged, molded, constructed or fabricated from any material suitable for its intended function, such as metal, plastic, synthetic polymer, heat-resistant plastic, or the like. A suitable material may be forged injection molded into the desired form. The components or parts of the locking assembly should be constructed of a suitable material which will retain its strength and integrity and provide sturdy support. In a preferred embodiment, the drive rod and gear or gear-teeth surface is made of metal, preferably aluminum die cast. The lever, drive rod, gear or gear-teeth surface, drive rod clamp, lock plate stopper, and the lock plate are operatively and/or rotatably mounted on the lid mount.

This invention provides a gear-driven locking assembly comprising a lever mounted on one side of the brew head assembly which allows for one hand operation to lock or unlock the brew head assembly.

The locking and unlocking of the brew head assembly is effectuated or assisted by a plurality of cams provided on a rotating lock plate and by corresponding recesses provided on the brew head assembly, preferably on the brew head bottom.

In a preferred embodiment, the lock plate comprises at least three cams and the brew head bottom comprises three corresponding recesses.

In a further embodiment, the lock plate comprises three cams and two corresponding recesses. In still another embodiment, the lock plate comprises three cams and one corresponding recess. In a separate embodiment, the lock plate comprises three cams and no corresponding recesses. In an embodiment, the cams are provided on the brew head bottom and the recesses are provided on the lock plate.

By turning the lock plate about a rotational axis, the locking assembly is interchangeable between a locked and an unlocked state. As the lever is lifted upward, the drive rod which is rotatably-mounted to the lid mount by a drive rod clamp rotates in the same direction as the force applied by the lever. The gear or gear-teeth surface provided on the drive rod meshes or mates with the gear or gear-teeth surface provided on the lock plate. The drive rod transfers the torque from the lever to the gear or gear-tooth surface on the lock plate. Rotation of the drive rod by the lever causes the gear or gear-teeth surface on the drive rod to drive the gear or gear-tooth surface on the lock plate.

By moving the lever in an appropriate direction, the lock plate rotates in the direction which disengages the cams from the corresponding recesses and unlocks the brew head assembly. By moving the lever in the reverse direction, the lock plate rotates in the direction which engages the cams with the corresponding recesses and locks the brew head assembly.

In another embodiment, the locking assembly further comprises a lock plate stopper 8 which prevents the lock plate from rotating when the lid mount is open. When the lid mount closes, the lock plate stopper automatically rises upward to allow the lock plate to rotate. In an embodiment, the lock plate stopper is inverse U-shaped having two prongs. In another embodiment, a spring or the like is mounted on at least one prong of the lock plate stopper. The function of the spring is to automatically push the lock plate stopper downward when the brew head assembly is open. When the brew head assembly is closed, the spring is compressed. When the brew head assembly is open, the compressed spring returns to its natural uncompressed state so that the lock plate stopper will return to the locking position.

Figure 2 is an exploded view of a gear-driven locking assembly of the present invention comprising a rotating lock plate. As shown in Figure 2, the locking assembly comprises a drive rod 2 rotatably-mounted on the lid mount of the brew head assembly, a lock plate 5 rotatably-mounted on the lid mount 6 of the brew head assembly, a gear 4 or gear-teeth surface provided on the drive rod, a gear or gear-teeth surface 5A provided on the rotating lock plate 5, a lever 1 attached to the drive rod 2 for rotating the drive rod 2 and for transferring torque from the lever 1 to the gear or gear-teeth surface on the drive rod and on the rotating lock plate, wherein the rotating lock plate is provided with locking cams 30 and wherein the brew head bottom of the brew head assembly is provided with corresponding recesses 31. In an embodiment, the drive rod comprises a U-shaped member 2A.

In one embodiment, the gear 4 is attached to the drive rod by E-clip.

In another embodiment, the drive rod 2 is rotatably-attacnea to the lid mount by two drive rod clamps 3. In a further embodiment, a lock plate stopper 8 is provided on the lid mount to prevent the lock plate from rotating as the lever is being pulled downward to close the brew head assembly.

In an embodiment, the drive rod, gear, and lock plate are made of a sturdy material, preferably aluminum die cast. The lid mount 6 is pivotally attached to the brew head bottom 7 by a hinge pin or the like, or by other conventional hinge mechanism.

Figures 3 and 4 show the lock plate 5 turning in the counterclockwise direction as shown by arrow 9 to unlatch/unlock the brew head assembly and in the clockwise direction as shown by arrow 10 to latch/lock the brew head assembly, respectively. Figure 5 shows the lever 1 and gear 4 moving in the direction of arrow 11 to latch/lock the brew head assembly.

### Example 2: Gear-Driven Rotating Lock Plate Locking Assembly with Two Corresponding Recesses

This embodiment of the present invention provides three cams with two corresponding recesses. This gear-driven locking assembly comprises a lever, a drive rod with a gear or gear-teeth surface, a drive rod clamp, a lock plate with a gear or gear-teeth surface, a drive rod clamp, a lock plate with a gear-teeth surface or gear disposed on its upper surface, a lock plate stopper, a lock plate fixer, a gear stopper, lever stopper cam, a stopper tube, a lid mount, and a brew head bottom, all operatively linked to form the gear-driven locking assembly.

Figure 8 shows the locking assembly of the present invention comprising a rotating lock plate. As shown in Figure 8, the locking assembly comprises a drive rod 13 rotatably-mounted on the lid mount of the brew head assembly, a lock plate 5 rotatably-mounted on the lid mount 6 of the brew head assembly, a gear 4 or gear-teeth surface provided on the drive rod, a gear or gear-teeth surface 5A provided on the rotating lock plate 5, a lever 1 attached to the drive rod 13 for rotating the drive rod 13 and for transferring torque from the lever 1 to the gear or gear-teeth surface on the drive rod and on the rotating lock plate, wherein the rotating lock plate is provided with three locking cams 30 and wherein the brew head bottom of the brew head assembly is provided with two recesses 31.

In this embodiment the back recess is reduced. The back locking cam 30A is the micro-switch lever 34 actuator. When the rotating lock plate is turned to the locked position, the back cam comes in contact with the micro-switch lever 34 which activates the micro-switch 35. The micro-switch 35 prevents operation of the coffee machine while the locking mechanism is in the un-lock stage. The micro-switch 35 and micro-switch lever 34 mount on the brew head bottom 7. A spring 33 is mounted on the micro-switch lever to keep the micro-switch lever and micro-switch without activate in unlock stage.

The lock plate fixer 36 is mounted on the lid frame 6. It prevents the lock plate from wobbling while it is turning. The lock plate fixer 36 is made of plastic. A stopper.tube 32 mounts on the drive rod to keep the gear in position.

A lock plate stopper 14 sits on the lid mount to prevent the lock plate from rotating as the lever is pulled downward to close. The compression spring 27 is mounted with the lock plate stopper and fix on the lid frame by the stopper base 41 and screw. A lever stop cam 40 mounts on the driven rod 13 to work with the lock plate stopper to prevent the lock plate from rotating.

This locking mechanism operates similarly as in the locking mechanism of example 1. The sealing assembly comprises a seal ring, a hot water valve, a water spreader, a pod ejector, a metal filter, a pod holder, and a coffee collector. The shape of the seal ring is round with a flap end on the bottom side and is capable of withstanding pressures of up to four (4) bars. In another embodiment, the seal ring is constructed to maintain liquid- and/or pressure-tight sealing up to twenty (20) bars. In a particular embodiment, the seal ring is a seal, O-ring, or gasket. In another embodiment, the seal ring is made of natural rubber, silicon rubber, rubber-like polymer, or synthetic plastic or material possessing similar characteristics. The seal ring is made of a suitable material capable of preventing leaks at pressures up to twenty (20) bars. In a preferred embodiment, the seal ring is made of an elastomer material, preferably silicone rubber.

Example 3: Gear-Driven Sliding Lock Plate Locking Assembly The gear-driven locking assembly of the present invention is useful for locking and unlocking the brew head of a coffee maker. The gear-driven locking assembly comprises a lever, a drive rod with ribs for holding gear(s), gear(s) or gear-teeth surface, a drive rod clamp, a sliding lock plate provided with a gear-teeth surface disposed on its upper surface, a gear stopper, a lid mount, and a brew head bottom, all operatively linked to form the gear-driven locking assembly.

In a preferred embodiment, two gears are attached to the drive rod. The drive rod is rotatably-mounted on the lid mount and is attached to the lever. When the drive rod rotates, the gears on the drive rod also rotate in the same direction. The sliding lock plate is moveably mounted on the lid mount. The gear-teeth surface disposed on the upper surface of the lock plate is intermeshed with the gear(s) or gear-teeth surface provided on the drive rod. Rotating the drive rod will cause the sliding lock plate to move inward or outward in a linear sliding manner, and cause the cams and corresponding recesses to engage or disengage, thereby locking or unlocking the brew head, respectively.

In a preferred embodiment, the sliding lock plate is provided with at least two cams. In a further embodiment, the lock plate comprises three cams and three corresponding recesses. In still another embodiment, the lock plate comprises three cams and two corresponding recesses. In still another embodiment, the lock plate comprises three cams and one corresponding recess. In a separate embodiment, the lock plate comprises three cams and no corresponding recesses.

The drive rod, gear or gear-teeth surface, and sliding lock plate are forged, molded, constructed or fabricated from any material suitable for its intended function, such as metal, plastic, synthetic polymer, heat-resistant plastic, or the like. A suitable material may be forged or injection molded into the desire form. The components of the locking assembly should be formed of a suitable material which will maintain its strength and integrity and provide sturdy support. In a preferred embodiment, the drive rod and gear or gear-teeth surface are made of metal, preferably aluminum die cast. The lever, drive rod, gears, drive rod clamp, gear stopper, and the sliding lock plate are operatively-mounted on the lid mount.

This invention provides a gear driven locking assembly comprising a lever mounted on one side of the brew head assembly which allows one hand operation to lock or unlock the brew head assembly.

The locking and unlocking of the brew head assembly is effectuated or assisted by a plurality of cams provided on a sliding lock plate and by corresponding recesses provided on the brew head assembly, preferably on the brew head bottom. In a preferred embodiment, the lock plate comprises at least three cams and the brew head bottom comprises three corresponding recesses.

In another embodiment, the lock plate comprises three cams and two corresponding recesses. In still another embodiment, the lock plate comprises three cams and one corresponding recess. In a separate embodiment, the lock plate comprises three cams and no corresponding recesses.

By moving the sliding lock plate in a linear sliding manner, the locking assembly is interchangeable between a locked and an unlocked state. As the lever is lifted upward, the drive rod which is rotatably-mounted to the lid mount by a drive rod clamp rotates in the same direction as the lever. The gear or gear-teeth surface provided on the drive rod meshes or mates with the gear-teeth surface provided on lock plate. The drive rod transfers the torque from the lever to the gear-teeth surface on the slide lock plate. The rotation of the drive rod by the lever causes the gear or gear-tooth surface on the driving rod to drive the gear teeth surface on the lock plate.

By moving the lever in an appropriate direction, the lock plate slides linearly in a direction which disengages the cams from the corresponding recesses and unlocks the brew head assembly. By moving the lever in the reverse direction, the lock plate slides linearly in a direction which engages the cams with the corresponding recesses and locks the brew head assembly.

In another embodiment, the locking assembly further comprises a gear stopper 14. In a further embodiment, the gear stopper is inverse L-shaped with a substantially vertical member and a substantially horizontal member. In a further embodiment, the horizontal member comprises a hook-like member or an appropriately-shaped protrusion which meshes with the gear or gear-tooth surface of the drive rod, and thus, prevents the lock plate from sliding when the lid mount is open. When the lid mount closes, the gear stopper automatically rises upward and un-meshes with the gear or gear-tooth surface of the drive rod to allow the gear to rotate freely and effectuate the locking of the brew head assembly.

Figure 10 is an exploded view of a gear-driven locking assembly of the present invention comprising a sliding lock plate. As shown in Figure 10, the locking assembly comprises a drive rod 13 rotatably-mounted on the lid mount 6 of the brew head assembly, a sliding lock plate 16 moveably-mounted on the lid mount of the brew head assembly, a gear 15 or gear-teeth surface attached to the drive rod, a gear-tooth surface 16A provided on the sliding lock plate 16, a lever attached to the drive rod 13 for rotating the drive rod 13 and for transferring torque from the handle 1 to the gear 15 or gear-tooth surface on the drive rod and on the sliding lock plate, wherein the sliding lock plate is provided with cams 30 and wherein the brew head bottom of the brew head assembly is provided with corresponding recesses 31.

In an embodiment, the gear 15 is attached to the drive rod 13 by E-clips. In a preferred embodiment, two gears are attached to the drive rod. In a further embodiment, the drive rod 13 is rotatably-attached to the lid mount by two drive rod clamps 3. In a yet a further embodiment, a gear stopper 14 is provided on the lid mount to prevent the sliding lock plate from moving when the lever is being pulled downward to close the brew head assembly. In yet another embodiment, the drive rod, gear or gear-tooth surface, and lock plate are made of a sturdy material, preferably aluminum die cast. The lid mount 6 is pivotally.attached to the brew head bottom 7 by the hinge pin or the like, or by other conventional hinge mechanism.

Figures 11 and 12 show the sliding lock plate 16 moving back and forth between the latched/locked and the un-latch/unlocked position.

Figure 13 shows the lever 1 and gear 15 moving in the direction of arrow 20 and 19, respectively, to latch/lock the brew head assembly.

### Example 4: Sealing Assembly

The sealing assembly comprises a seal ring, a water spreader, a pod ejector, a metal filter, a pod holder, and a coffee collector. The sealing assembly may further comprise a brew head bottom. In one embodiment, the shape of the seal ring is round with a flap end on the bottom side and is capable of withstanding pressures of up to four (4) bars. In another embodiment, the seal ring is constructed to maintain liquid-and/or pressure-tight sealing up to twenty (20) bars. In a particular embodiment, the seal ring is a seal, O-ring, or gasket. In another embodiment, the seal ring is made of natural rubber, silicon rubber, rubber-like polymer, or synthetic plastic or material possessing similar characteristics. The seal ring is made of a suitable material capable of preventing leaks at pressures up to twenty (20) bars. In a preferred embodiment, the seal ring is made of an elastomer material, preferably silicone rubber.

Figure 16 shows a sealing assembly of the present invention. The sealing assembly is mounted on the under side of the lid mount 5. In Figure 11, the water spreader 22 is adapted to support the seal ring 21. The water spreader and the seal ring are fixed to the lid mount 5 by a screw or by other suitable fastening means well-known to one of ordinary skill in the art, including, but not limiting to, a rivet, nut, or bolt. In a preferred embodiment, the seal ring 21 has a flap on its lower portion to improve sealing between the lid mount and the pod holder. The pod ejector 23 prevents the coffee pod from sticking to the water spreader 22. In one embodiment, the pod ejector is attached to the water spreader.

The filter is configured for holding the coffee pod or coffee grounds. A filter 24, preferably made of metal, is fixed on the pod holder 25 to prevent the coffee pod or coffee grounds from blocking the outlet holes 25A provided in the pod holder. The upper rim of the pod holder is designed to improve sealing between the pod holder and the lid mount. The coffee collector 26 holds the brewed coffee temporarily before it flows into a cup or container through a spout located on the bottom of the coffee collector.

### Example 5 Sealing Assembly with valve

Figure 17 shows a further sealing assembly of the present invention. The sealing assembly is mounted on the under side of the lid mount 5. The water spreader 22 is adapted to support the seal ring 21. In between the lid frame and the water spreader, there is a hot water valve 37. It is a flat silicone with a part with dome shape to block the outlet hole on the lid frame. When the pump works, the dome shape part is pressed down by the pumping water. So the hot water can pass through the outlet . The water spreader and the seal ring are fixed to the lid mount 5 by a screw or by other suitable fastening means well-known to one of ordinary skill in the art, including, but not limiting to, a rivet, nut, or bolt. In a preferred embodiment, the seal ring 21 has a flap on its lower portion to improve sealing between the lid mount and the pod holder. The pod ejector 23 prevents the coffee pod from sticking to the water spreader 22. In one embodiment, the pod ejector is attached to the water spreader by spot weld.

As noted supra, the brew head assembly of the present invention may be adapted to brew tea, hot chocolate, herbal drinks, and similar beverages or extracts and the like. Additional advantages and modifications will be readily apparent to one of ordinary skill when following the teachings of the present invention.

## Claims

1. A gear-driven locking assembly for a brew head assembly including a brew head bottom (7), a lid mount (6) pivotally joined on the brew head bottom and a lever (1), said gear-driven locking assembly being **characterized by** comprising:
a drive rod (2) wherein
the lever is attached to the drive rod, the drive rod is rotatably mounted on the lid mount of the brew head assembly by one or more drive rod clamp (3),
a rotating lock plate (5) rotatably mounted on the lid mount, the lock plate comprises two or more cams (30) provided on the periphery of the lock plate with two or more recesses (31) provided on the brew head bottom of the brew head assembly;
a first gear or gear-teeth surface (4) provided on the drive rod; and
a second gear or gear-teeth surface (5A) provided on the lock plate, the first and second gear or gear-teeth surface intermesh with one another for rotating the lock plate between a locked and an unlocked position.

2. The locking assembly of claim 1, wherein the gear or gear-teeth surface is a bevel gear or bevel gear-tooth surface.

3. The locking assembly of claim 1, wherein the drive rod further comprises a U-shaped member (2A).

4. The locking assembly of claim 1, further comprising a lock plate stopper (8) that restricts the movement of the lock plate when the lid mount is being closed.

5. The locking assembly of claim 4, wherein the lock plate stopper is U-shaped.

6. A gear-driven locking assembly for a brew head assembly including a brew head bottom (7), a lid mount (6) pivotally joined to the brew head bottom and a lever (1), said gear-driven locking assembly being **characterized by** comprising:
a drive rod (13) wherein
the lever is attached to the drive rod, the drive rod is rotatably mounted on the lid mount of the brew head assembly by one or more drive rod clamp (3),
a sliding lock plate (16) moveably mounted on the lid mount, the lock plate comprises two or more cams (30) provided on the periphery of the lock plate with two or more recesses (31) provided on a brew head bottom of the brew head assembly;
a first gear or gear-teeth surface (15) provided on the drive rod; and
a second gear-teeth surface (16A) provided on the lock plate, the first gear or gear-teeth surface and the second gear-teeth surface intermesh with one another for moving the lock plate between a locked and an unlock position.

7. The locking assembly of claim 6, wherein the gear teeth surface on the lock plate has a linear arrangement.

8. The locking assembly of claim 6, further comprising a gear stopper (14) that restricts the movement of the lock plate when the lid mount is being closed.

9. The locking assembly of claim 8, wherein the lock plate stopper is L-shaped.

10. The locking assembly of claim 1 or 6, wherein two or more cams are provided on the brew head bottom of the brew head assembly, and the corresponding recesses are provided on the periphery of the lock plate.

11. The locking assembly of claim 1 or 6, wherein the locking cam is wedge-shaped.

12. The locking assembly of claim 1 or 6, further comprising a sealing assembly, wherein the locking assembly and sealing assembly provide liquid- and pressure-tight seal when the brew head assembly is in a closed position.

13. The locking assembly of claim 12, wherein the sealing assembly and the locking assembly provide liquid- and pressure-tight seal up to twenty (20) bars.

14. The locking assembly of claim 12, wherein components of the locking and sealing assembly are molded or forged from plastic, metal or a suitable having a sufficient combination of strength and rigidity to maintain its structural integrity.

15. The locking assembly of any claims 1 through 14 wherein the lock plate comprises three cams and two recesses.

16. A brew head assembly, comprising:
a) the locking assembly of claim 4 or claim 8; and
b) a sealing assembly, the locking assembly and sealing assembly being operatively connected to provide liquid- and pressure-tight seal of up to twenty (20) bars when the brew head assembly is in a closed position,
wherein the sealing assembly comprises a seal ring (21), water spreader (22), pod ejector (23), metal filter (24), pod holder (25), and coffee collector (26) which are operatively linked to form the sealing assembly or
wherein the sealing assembly comprises a seal ring (21), water spreader (22), pod ejector (23), metal filter (24), pod holder (25), coffee collector (26), and a hot water valve (37) which are operatively linked to form the sealing assembly.

17. The brew head assembly of claim 17, wherein the seal ring is round with a flap on its bottom portion for improved sealing.

## Patentansprüche

1. Zahnradgetriebener Sperraufbau für einen Brühkopfaufbau, der einen Brühkopfboden (7), eine schwenkbar am Brühkopfboden angeschlossene Deckelbefestigung (6) und einen Hebel (1) umfasst, wobei der zahnradgetriebene Sperraufbau **dadurch gekennzeichnet ist, dass** er Folgendes umfasst:
eine Treibstange (2), wobei
der Hebel an der Treibstange befestigt ist, und die Treibstange durch eine oder mehrere Treibstangenklammern (3) drehbar an der Deckelbefestigung des Brühkopfaufbaus angebracht ist;
eine drehbare Sperrplatte (5), die drehbar an der Deckelbefestigung angebracht ist, wobei die Sperrplatte zwei oder mehr Nocken (30) umfasst, die am Umfang der Sperrplatte bereitgestellt sind, wobei am Brühkopfboden des Brühkopfaufbaus zwei oder mehr Vertiefungen (31) bereitgestellt sind;
ein erstes Zahnrad oder eine erste Verzahnungsfläche (4), das bzw. die an der Treibstange bereitgestellt ist; und
ein zweites Zahnrad oder eine zweite Verzahnungsfläche (5A), das bzw. die an der Sperrplatte bereitgestellt ist, wobei das erste und das zweite Zahnrad oder die erste und die zweite Verzahnungsfläche miteinander verzahnen, um die Sperrplatte zwischen einer gesperrten und einer entsperrten Stellung zu drehen.

2. Sperraufbau nach Anspruch 1, wobei das Zahnrad oder die Verzahnungsfläche ein Kegelrad oder eine Kegelverzahnungsfläche ist.

3. Sperraufbau nach Anspruch 1, wobei die Treibstange ferner ein U-förmiges Element (2A) umfasst.

4. Sperraufbau nach Anspruch 1, ferner umfassend einen Sperrplattenanschlag (8), der die Bewegung der Sperrplatte beschränkt, wenn die Deckelbefestigung geschlossen ist.

5. Sperraufbau nach Anspruch 4, wobei der Sperrplattenanschlag U-förmig ist.

6. Zahnradgetriebener Sperraufbau für einen Brühkopfaufbau, der einen Brühkopfboden (7), eine schwenkbar am Brühkopfboden angeschlossene Deckelbefestigung (6) und einen Hebel (1) umfasst, wobei der zahnradgetriebene Sperraufbau **dadurch gekennzeichnet ist, dass** er Folgendes umfasst:
eine Treibstange (13), wobei
der Hebel an der Treibstange befestigt ist, und die Treibstange durch eine oder mehrere Treibstangenklammern (3) drehbar an der Deckelbefestigung des Brühkopfaufbaus angebracht ist;
eine Gleitsperrplatte (16), die beweglich an der Deckelbefestigung angebracht ist, wobei die Sperrplatte zwei oder mehr Nocken (30) umfasst, die am Umfang der Sperrplatte bereitgestellt sind, wobei an einem Brühkopfboden des Brühkopfaufbaus zwei oder mehr Vertiefungen (31) bereitgestellt sind;
ein erstes Zahnrad oder eine erste Verzahnungsfläche (15), das bzw. die an der Treibstange bereitgestellt ist; und
eine zweite Verzahnungsfläche (16A), die an der Sperrplatte bereitgestellt ist, wobei das erste Zahnrad oder die erste Verzahnungsfläche und die zweite Verzahnungsfläche miteinander verzahnen, um die Sperrplatte zwischen einer gesperrten und einer entsperrten Stellung zu bewegen.

7. Sperraufbau nach Anspruch 6, wobei die Verzahnungsfläche an der Sperrplatte eine lineare Anordnung aufweist.

8. Sperraufbau nach Anspruch 6, ferner umfassend einen Zahnradanschlag (14), der die Bewegung der Sperrplatte beschränkt, wenn die Deckelbefestigung geschlossen ist.

9. Sperraufbau nach Anspruch 8, wobei der Sperrplattenanschlag L-förmig ist.

10. Sperraufbau nach Anspruch 1 oder 6, wobei zwei oder mehr Nocken am Brühkopfboden des Brühkopfaufbaus bereitgestellt sind, und die entsprechenden Vertiefungen am Umfang der Sperrplatte bereitgestellt sind.

11. Sperraufbau nach Anspruch 1 oder 6, wobei die Sperrnocke keilförmig ist.

12. Sperraufbau nach Anspruch 1 oder 6, ferner umfassend einen Dichtungsaufbau, wobei der Sperraufbau und der Dichtungsaufbau eine flüssigkeits- und druckdichte Dichtung bereitstellen, wenn sich der Brühkopfaufbau in einer geschlossenen Stellung befindet.

13. Sperraufbau nach Anspruch 12, wobei der Dichtungsaufbau und der Sperraufbau eine flüssigkeits- und druckdichte Abdichtung bis zu zwanzig (20) Bar bereitstellen.

14. Sperraufbau nach Anspruch 12, wobei Bestandteile des Sperr- und des Dichtungsaufbaus aus Kunststoff, Metall oder einem geeigneten Material mit einer ausreichenden Kombination der Stärke und der Starrheit, um seine strukturelle Integrität zu bewahren, gegossen oder geschmiedet sind.

15. Sperraufbau nach einem der Ansprüche 1 bis 14, wobei die Sperrplatte drei Nocken und zwei Vertiefungen umfasst.

16. Brühkopfaufbau, umfassend
a) den Sperraufbau von Anspruch 4 oder Anspruch 8; und
b) einen Dichtungsaufbau, wobei der Sperraufbau und der Dichtungsaufbau betrieblich verbunden sind, um eine flüssigkeits- und druckdichte Abdichtung bis zu zwanzig (20) Bar bereitzustellen, wenn sich der Brühkopfaufbau in einer geschlossenen Stellung befindet, wobei der Dichtungsaufbau einen Dichtungsring (21), einen Wasserstreuer (22), einen Padauswerfer (23), einen Metallfilter (24), einen Padhalter (25) und einen Kaffeesammler (26), umfasst, die betrieblich verbunden sind, um den Dichtungsaufbau zu bilden, oder wobei der Dichtungsaufbau einen Dichtungsring (21), einen Wasserstreuer (22), einen Padauswerfer (23), einen Metallfilter (24), einen Padhalter (25), einen Kaffeesammler (26) und ein Heißwasserventil (37) umfasst, die betrieblich verbunden sind, um den Dichtungsaufbau zu bilden.

17. Brühkopfaufbau nach Anspruch 16, wobei der Dichtungsring für eine verbesserte Abdichtung rund mit einer Lasche an seinem unteren Ende ist.

## Revendications

1. Ensemble de verrouillage entraîné par engrenage, pour un ensemble de tête d'infusion comprenant un fond de tête d'infusion (7), une monture de couvercle (6), reliée de façon pivotante au fond de tête d'infusion, et un levier (1), ledit ensemble de verrouillage entraîné par engrenage étant **caractérisé en ce qu'**il comprend :
une tige d'entraînement (2) dans laquelle
le levier est relié à la tige d'entraînement, la tige d'entraînement est montée de façon rotative sur la monture de couvercle de l'ensemble de tête d'infusion par une ou plusieurs brides de tige d'entraînement (3),
une plaque de verrouillage rotative (5) montée de façon rotative sur la monture de couvercle, la plaque de verrouillage comprenant deux ou plusieurs cames (30) prévues sur le pourtour de la plaque de verrouillage, avec deux ou plusieurs renfoncements (31) prévus dans le fond de tête de verrouillage de l'ensemble de tête d'infusion ;
une première surface de dent d'engrenage (4) prévue sur la tige d'entraînement ; et
une deuxième surface de dent d'engrenage (5A) prévue sur la plaque de verrouillage, où la première et la deuxième surface de dent d'engrenage engrènent l'une avec l'autre, pour faire tourner la plaque de verrouillage entre une position verrouillée et une position déverrouillée.

2. Ensemble de verrouillage selon la revendication 1, dans lequel la surface d'engrenage ou de dent d'engrenage est une surface d'engrenage d'angle ou de dent d'engrenage d'angle.

3. Ensemble de verrouillage selon la revendication 1, dans lequel la tige d'entraînement comprend un élément en forme de U (2A).

4. Ensemble de verrouillage selon la revendication 1, comprenant en outre une pièce d'arrêt de plaque de verrouillage (8) limitant le mouvement de la plaque de verrouillage lors de la fermeture de la monture de couvercle.

5. Ensemble de verrouillage selon la revendication 4, dans lequel la pièce d'arrêt de plaque de verrouillage est en forme de U.

6. Ensemble de verrouillage entraîné par engrenage, pour un ensemble de tête d'injection comprenant un fond de tête d'injection (7), une monture de couvercle (6) reliée de façon pivotante au fond de tête d'injection, et un levier (1), ledit ensemble de verrouillage entraîné par engrenage étant **caractérisé en ce qu'**il comprend :
une tige d'entraînement (13) dans laquelle
le levier est relié à la tige d'entraînement, la tige d'entraînement est montée de façon rotative sur la monture de couvercle de l'ensemble de tête d'infusion, par une ou plusieurs brides de tige d'entraînement (3),
une plaque de verrouillage coulissante (16) montée de façon mobile sur la monture de couvercle, la plaque de verrouillage comprenant deux ou plusieurs cames (30) prévues sur le pourtour de la plaque de verrouillage, avec deux ou plusieurs renfoncements (31) prévus dans le fond de tête de verrouillage de l'ensemble de tête d'infusion ;
une première surface de dent d'engrenage (15) prévue sur la tige d'entraînement ; et
une deuxième surface de dent d'engrenage (16A) prévue sur la plaque de verrouillage, où la première et la deuxième surface de dent d'engrenage engrènent l'une avec l'autre, pour déplacer la plaque de verrouillage entre une position verrouillée et une position déverrouillée.

7. Ensemble de verrouillage selon la revendication 6, dans lequel la surface de dent d'engrenage sur la plaque de verrouillage présente un arrangement linéaire.

8. Ensemble de verrouillage selon la revendication 6, comprenant en outre une pièce d'arrêt d'engrenage (14) limitant le mouvement de la plaque de verrouillage lors de la fermeture de la monture de couvercle.

9. Ensemble de verrouillage selon la revendication 8, dans lequel la pièce d'arrêt de plaque de verrouillage est en forme de L.

10. Ensemble de verrouillage selon la revendication 1 ou 6, dans lequel deux ou plusieurs cames sont prévues sur le fond de tête d'injection de l'ensemble de tête d'infusion, et les renfoncements correspondants sont prévues sur le pourtour de la plaque de verrouillage.

11. Ensemble de verrouillage selon la revendication 1 ou 6, dans lequel la came de verrouillage est en forme de coin.

12. Ensemble de verrouillage selon la revendication 1 ou 6, comprenant en outre un ensemble d'étanchéité, dans lequel l'ensemble de verrouillage et l'ensemble d'étanchéité fournissent un joint étanche au liquide et à la pression lorsque l'ensemble de tête d'infusion est dans une position fermée.

13. Ensemble de verrouillage selon la revendication 12, dans lequel l'ensemble d'étanchéité et l'ensemble de verrouillage fournissent un joint étanche au liquide et à la pression jusqu'à vingt (20) bar.

14. Ensemble de verrouillage selon la revendication 12, dans lequel les composants des ensembles de verrouillage et d'étanchéité sont moulés ou forgés dans une matière plastique, un métal ou un autre matériau approprié, présentant une combinaison suffisante de force et de rigidité pour maintenir son intégrité structurelle.

15. Ensemble de verrouillage selon l'une quelconque des revendications 1 à 14, dans lequel la plaque de verrouillage comprend trois cames et deux renfoncements.

16. Ensemble de tête d'infusion comprenant :
a) l'ensemble de verrouillage de la revendication 4 ou de la revendication 8 ; et
b) un ensemble d'étanchéité, l'ensemble de verrouillage et l'ensemble d'étanchéité étant reliés fonctionnellement pour fournir un joint étanche au liquide et à la pression jusqu'à vingt (20) bar lorsque l'ensemble de tête d'infusion est dans une position fermée,
dans lequel l'ensemble d'étanchéité comprend une bague d'étanchéité (21), un répartiteur d'eau (22), un éjecteur de dosette (23), un filtre métallique (24), un support de dosette (25) et un collecteur de café (26), reliés opérationnellement pour former l'ensemble d'étanchéité ou
dans lequel l'ensemble d'étanchéité comprend une bague d'étanchéité (21), un répartiteur d'eau (22), un éjecteur de dosette (23), un filtre métallique (24), un support de dosette (25), un collecteur de café (26) et une valve à eau chaude (37), reliés opérationnellement pour former l'ensemble d'étanchéité.

17. Ensemble de tête d'infusion selon la revendication 16, dans lequel la bague d'étanchéité est ronde, avec un rabat sur sa portion de fond, pour une meilleure étanchéité.
